# EUROPÄISCHE PATENTSCHRIFT

(11) **EP 0 488 019 B1**
(45) Veröffentlichungstag und Bekanntmachung des Hinweises auf die Patenterteilung: **13.03.1996**
(21) Anmeldenummer: 91119699.6
(22) Anmeldetag: 19.11.1991
(51) Int. Cl.: C08J 9/16, C08L 25/04

(54) **Expandierbare Styrolpolymerisate mit hoher Expandierbarkeit**
Expansible styrene polymers with high expansibility
Polymères styréniques expansibles à haute expansibilité

(30) Priorität: 29.11.1990 DE 4038044
(43) Veröffentlichungstag der Anmeldung: 03.06.1992
(73) Patentinhaber: BASF Aktiengesellschaft, D-67063 Ludwigshafen (DE)
(72) Erfinder: Walter, Manfred, Dr., W-6720 Speyer (DE); Husemann, Wolfram, Dr., W-6730 Neustadt (DE); Naegele, Dieter, Dr., W-6520 Worms 24 (DE)

(56) Entgegenhaltungen:
- DE-A- 1 282 935
- GB-A- 886 811
- CHEMICAL ABSTRACTS, vol. 106, no. 10, 9. März 1987, Columbus, Ohio, US; abstract no. 68452M, HIGASHAMA & AL.: 'Foams with good dimensional stability'
- CHEMICAL ABSTRACTS, vol. 81, no. 22, 2. Dezember 1974, Columbus, Ohio, US; abstract no. 137151, TOBINAGA. 'Epandable styrene beads with godd expandability'
- CHEMICAL ABSTRACTS, vol. 81, no. 22, 2. Dezember 1974, Columbus, Ohio, US; abstract no. 137092, OKUDA: 'Expandable styrene resin composition'

## Beschreibung

Die Erfindung betrifft expandierbare Styrolpolymerisate, die sich durch ein besonders hohes Expandiervermögen auszeichnen.

Aus der EP-B 106 129 ist ein expandierbares Polystyrol mit verbesserter Expandierbarkeit bekannt, bei dem das Polystyrol ein mittleres Molekulargewicht M_{w} (Gewichtsmittel) zwischen 130 000 und 180 000 aufweist und bei dem die hochmolekulare Flanke der Molekulargewichtsverteilungskurve so steil ist, daß die Differenz der Mittelwerte (M_{z+1}-M_{z}) weniger als 150 000 beträgt. Gemäß den Beispielen dieser Patentschrift können aus derartigem expandierbarem Polystyrol, das etwa 1 Mol Pentan pro kg Polystyrol enthält, durch Aufschäumen mit hohem Durchsatz Schaumstoffperlen mit einem Schüttgewicht von 15 g/l hergestellt werden.

Aus DE-A-12 82 935 sind verzweigte Styrolpolymerisate bekannt, die bromhaltige Monomere einpolymerisiert enthalten. Diese Polymerisate können gemäß dem Beispiel auf ein Schüttgewicht von 20 g/l aufgeschäumt werden.

In GB-A-886,811 ist ein verzweigtes Styrolpolymerisat beschrieben, dem das Treibmittel mittels Extrusion einverleibt und das anschließend granuliert und verschäumt wird.

Bei diesem Verfahren ist allerdings der Zusatz einer hohen Treibmittelmenge erforderlich.

Der vorliegenden Erfindung lag die Aufgabe zugrunde, expandierbares Polystyrol zu entwickeln, welches ein wesentlich höheres Expandiervermögen besitzt, das also mit vergleichbaren Treibmittelmengen zu einem wesentlich niedrigerem Schüttgewicht aufgeschäumt werden kann, bzw. vergleichbare Schüttgewichte bereits mit wesentlich geringeren Treibmittelmengen herzustellen gestattet.

Es wurde nun überraschenderweise gefunden, daß diese Aufgabe gelöst wird, wenn das Styrolpolymerisat eine Viskositätszahl, gemessen in Toluol, zwischen 55 und 80 [ml/g] und einem Schmelzindex MFI (190°C, 3,8 kp) zwischen 7,5 und 30 [g/10 min] aufweist.

Gegenstand der Erfindung sind somit expandierbare Styrolpolymerisate mit hoher Expandierbarkeit, enthaltend
a) ein Styrolpolymerisat mit einer Viskositätszahl, gemessen in Toluol, zwischen 55 und 80 [ml/g] welches mindestens 50 Gew.-% Styrol und 0,0025 bis 0,05 Mol-% eines Monomeren mit mehr als einer polymerisierbaren Doppelbindung einpolymerisiert enthält,
b) 1 bis 10 Gew.-%, bezogen auf a), eines C₃- bis C₆-Kohlenwasserstoffs als Treibmittel, sowie gegebenenfalls
c) übliche Hilfsmittel in wirksamen Mengen, dadurch gekennzeichnet, daß das Styrolpolymerisat einen Schmelzindex MFI (190°C, 3,8 kp) zwischen 7,5 und 30 [g/10 min] aufweist und herstellbar ist durch Polymerisation in Gegenwart von 0,01 bis 1 Gew.-%, bezogen auf a), eines Reglers mit einer Kettenübertragungskonstante K zwischen 0,1 und 50.

Gegenstand der Erfindung ist ferner ein Verfahren zur Herstellung expandierbarer Styrolpolymerisate, das dadurch gekennzeichnet ist, daß man Styrol und gegebenenfalls weitere Comonomere mit einer polymerisierbaren Doppelbindung in wäßriger Suspension in Gegenwart von 0,01 bis 1 Gew.-% eines Reglers mit einer Kettenübertragungskonstante K zwischen 0,1 und 50 und in Gegenwart von 0,0025 bis 0,05 Gew.-% eines Monomeren mit mehr als einer polymerisierbaren Doppelbindung als Verzweiger polymerisiert und von, während oder nach der Polymerisation das Treibmittel und gegebenenfalls übliche Zusatzstoffe zugibt.

Gegenstand der Erfindung sind weiterhin Styrolpolymerisat-Schaumstoffe der Dichte 0,005 bis 0,1 g/cm³, enthaltend
a) ein Styrolpolymerisat mit mindestens 50 Gew.-% ein polymerisiertem Styrol mit einer Viskositätszahl, gemessen in Toluol, zwischen 55 und 80 [ml/g] und einem Schmelzindex MFI (190°C, 3,8 kp) zwischen 7,5 und 30 [g/10 min], welches 0,0025 bis 0,05 Mol - % eines Monomeren mit mehr als einer polymerisierbaren Doppelbindung einpolymerisiert enthält und herstellbar ist durch Polymerisation in Gegenwart von 0,01 bis 1 Gew. - %, bezogen auf a), eines Reglers mit einer Kettenübertragungskonstante K zwischen 0,1 und 50, sowie gegebenenfalls
c) übliche Zusatzstoffe in wirksamen Mengen.

Überraschenderweise wird die Dimensionsstabilität der aus den neuen expandierbaren Styrolpolymerisaten hergestellten Schaumstoff-Formkörper nicht negativ beeinflußt.

Als Hauptkomponente a) enthalten die neuen Produkte Polystyrol und/oder ein Styrolpolymerisat mit mindestens 50 Gew.-%, vorzugsweise mindestens 80 Gew.-% einpolymerisiertem Styrol. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Vorteilhaft enthält das Styrolpolymerisat eine geringe Menge eines Verzweigers einpolymerisiert, d.h. einer Verbindung mit mehr als einer, vorzugsweise 2 Doppelverbindungen. Der Verzweiger wird im allgemeinen in Mengen von 0,0025 bis 0,05 mol-%, bezogen auf Styrol, verwendet.

Auch Mischungen verschiedener Styrolpolymerisate können verwendet werden, wie sie beispielsweise in der DE-A 39 01 329, 08 238, 39 36 596, 39 31 862 und 39 16 602 beschrieben sind.

Die erfindungsgemäßen Styrolpolymerisate unterscheiden sich von solchen nach dem Stand der Technik durch erheblich höhere Schmelzindices bei vergleichbaren Viskositätszahlen. Die Viskositätszahl nach DIN 53 726 (gemessen in Toluol, 0,5 % bei 25°^{C)} liegt zwischen 55 und 80 [ml/g], vorzugsweise zwischen 60 und 75 [ml/g]. Der Schmelzindex nach DIN 53 735, MFI (190°C; 3,8 kp) liegt zwischen 7,5 und 30 [g/10 min], vorzugsweise zwischen 10 und 20 [g/10 min]. Der im Vergleich zu üblichen Styrolpolymerisaten mit gleicher Viskositätszahl stark erhöhte Schmelzindex ist darauf zurückzuführen, daß das erfindungsgemäße Styrolpolymerisat verzweigt ist.

Bestimmt man den Verzweigungsgrad nach der in den Beispielen angeführten Methode, so ergibt sich, dap pro Moleküle des verwendeten Verzweigers mit zwei polymerisierbaren Doppelbindungen etwa 0,6 bis 1,6 Verzweigungspunkte in die Polymerkette eingebaut worden sind und daß das Polymere etwa 0,05 bis 2,0, vorzugsweise 0,1 bis 1,0 Verzweigungspunkte pro 1000 Monomereinheiten besitzt.

Die Auswahl des verwendeten Verzweigers sollte zweckmäßig derart sein, daß das Styrolpolymerisat keine oder praktisch keine vernetzten Anteile enthält, d.h. es sollte in siedendem Toluol vollständig oder zumindest zu mer als 98 Gew.-% löslich sein.

Das mittlere Molekulargewicht (Gewichtsmittel) der Styrolpolymerisate liegt im allgemeinen zwischen 150 000 und 300 000 und vorzugsweise zwischen 180 000 und 260 000. Der Anteil mit einem Molekulargewicht unter 200 000 liegt im allgemeinen bei 40 bis 80 Gew.-%, vorzugsweise bei 45 bis 75 Gew.-%.

Die expandierbaren Styrolpolymerisate enthalten als Treibmittel b) 1 bis 10 Gew.-%, vorzugsweise 2 bis 6 Gew.-%, insbesondere 2,5 bis 4 Gew.-%, bezogen auf die Komponente a) eines C₃- bis C₆-Kohlenwasserstoffs, wie Propan, Butan, Isobutan, n-Pentan, i-Pentan, Neopentan, Cyclopentan und/oder Hexan. Vorzugsweise wird ein handelsübliches Pentan-Gemisch verwendet.

Als Komponente c) können die expandierbaren Styrolpolymerisate übliche Hilfsstoffe, wie Farbstoffe, Pigmente, Füllstoffe, Stabilisatoren, Flammschutzmittel, Synergisten, Keimbildner, Gleitmittel und dgl. in üblichen wirksamen Mengen enthalten.

Als Zusatzstoffe sind auch Poly-(2,6-dimethyl)-1,4-phenylenether und Poly-1,4-phenylensulfid geeignet (vgl. DE-A-39 04 370 und DE-A-39 24 868). Diese Zusätze bewirken eine Erhöhung der Wärmeformbeständigkeit des Schaumstoffs. Geeignete Zusatzstoffe sind auch styrollösliche Elastomere (vgl. DE-A-39 15 602), die die Elastizität des Schaumstoffs erhöhen.

Nach einem bevorzugten Verfahren werden die erfindungsgemäßen expandierbaren Styrolpolymerisate hergestellt durch Polymerisation von Styrol, gegebenenfalls unter Mitverwendung von Comonomeren, in wäßriger Suspension, wobei vor, während oder nach der Polymerisation die oben beschriebenen Treibmittel und gegebenenfalls die Zusatzstoffe zugesetzt werden. Erfindungswesentlich ist es, bei der Polymerisation sowohl einen Regler als auch einen Verzweiger mitzuverwenden.

Man arbeitet üblicherweise unter Verwendung von 0,01 bis 1 Gew.-%, vorzugsweise 0,1 bis 0,75 Gew.-%, insbesondere 0,25 bis 0,5 Gew.-%, eines Reglers mit einer Kettenübertragungskonstante K zwischen 0,1 und 50, vorzugsweise zwischen 1 und 30, wie es in der EP-B 106 129 und DE-A 39 21 148 beschrieben ist. Geeignete Regler sind beispielsweise Thiole, wie n-Dodecylmercaptan (K = 19), tert.-Dodecylmercaptan (K = 3), n-Butylmercaptans (K = 22) und tert.-Butylmercaptan (K = 3,6), ferner Pentaphenylethan (K = 2,0) und dimeres α-Methylstyrol (K = 0,5).

Geeignete Verzweiger, die im allgemeinen in Mengen von 0,0025 bis 0,05 mol-%, vorzugsweise 0,005 bis 0,025 mol-%, verwendet werden, sind Monomere mit mehr als einer, vorzugsweise zwei polymerisierbaren Doppelbindungen, wie Butadien, Isopren, Vinylcyclohexen, Vinylacrylat, Divinylbenzol, Glykol-di(meth)acrylat, Butandioldiacrylat, Butandioldimethacrylat und Hexandioldiacrylat. Regler und Verzweiger werden entweder vor Polymerisationsbeginn vorgelegt oder aber erst während der Polymerisation, beispielsweise bei einem Umsatz von 20 bis 80 % dem Ansatz zugefügt. Vorteilhaft wird der Regler vorgelegt und der Verzweiger erst während der Polymerisation zugefügt.

Als Polymerisationskatalysatoren verwendet man die bei der radikalischen Styrolpolymerisation üblichen Initiatoren, insbesondere organische Peroxiverbindungen, wie Perester, Percarbonate, Peroxide, Peroxicarbonate, Perketale u.a. Bewährt hat sich eine Kombination von Peroxiverbindungen, die bei niedriger Temperatur zerfallen, wie Dibenzoylperoxid oder t-Butyl-peroxi-2-ethylhexylhexanoat, mit solchen, die bei höherer Temperatur zerfallen, wie tert.-Butylperbenzoat und Dicumylperoxid.

Durch gleichzeitige Verwendung von Regler und Verzweiger erhält man ein verzweigtes Styrolpolymerisat mit üblichem Molgewicht, das sich durch ein besonders hohes Expandiervermögen auszeichnet.

Der Gehalt an Styrol in den expandierbaren Styrolpolymerisaten sollte im allgemeinen niedrig sein und üblicherweise weniger als 0,2 Gew.-%, vorzugsweise weniger als 0,1 Gew.-%, insbesondere weniger als 0,08 Gew.-% betragen. Zur Erreichung dieses Ziels ist es zweckmäßig, bei Verwendung von Mercaptanen als Regler, diese erst während der Polymerisation bei einem Umsatz zwischen 20 und 90 % zuzufügen.

Die erfindungsgemäßen treibmittelhaltigen Polystyrol-Teilchen sind perlförmig und haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,5 und 2 cm und einer Dichte zwischen 0,005 und 0,1 g/cm³ vorgeschäumt werden. Es zeigt sich, daß dabei der Durchsatz bei handelsüblichen kontinuierlichen Vorschäumern erheblich erhöht wird bzw. der gleiche Durchsatz bereits mit geringeren Treibmittelmengen erzielt wird.

Die vorgeschäumten Teilchen können dann nach üblichen Verfahren zu Schaumstoff-Formteilen mit einem Raumgewicht von 0,005 bis 0,1 g/cm³ ausgeschäumt werden.

Die in den Beispielen genannten Teile sind Gewichtsteile.

### Beispiele 1 bis 9

### 1. Polymerisation

In einem druckfesten Rührkessel wurde eine Mischung aus 150 Teilen Wasser, 0,1 Teilen Natriumpyrophosphat, 100 Teilen Styrol, 0,15 Teilen Benzoylperoxid, 0,25 Teilen tert.-Butylperbenzoat und den in der Tabelle angegebenen Mengen Pentan unter Rühren innerhalb von 2 Stunden auf 90°C erhitzt. Zugesetzt wurden ferner die in der Tabelle angegebenen Mengen an Regler und Verzweiger. Die Angabe Zugabezeitpunkt ist ab Polymerisationsbeginn zu verstehen.

Nach 1 Stunde bei 90°C wurden 4 Teile einer 10 %igen wäßrigen Lösung von Polyvinylpyrrolidon zugegeben. Nach den in der Tabelle angegebenen Zeiten wurde die ebenfalls dort angegebene Menge Pentan zugegeben.

Dann wurde weitere 2 Stunden bei 90°C, anschliepend 2 Stunden bei 100°C und schließlich 4 Stunden bei 125°C gerührt.

Das erhaltene Perlpolymerisat mit einem mittleren Teilchendurchmesser von 1,2 mm wurde isoliert, gewaschen und getrocknet.

Die Bestimmung der Viskositätszahl VZ (0,5 %ig in Toluol bei 25°C)) erfolgte nach DIN 53 726, die Bestimmung des Schmelzindexes MFI (180°C, 3,8 kp) nach DIN 53 735, jeweils an entgasten Proben.

### 2. Expandierbarkeit

Zur Untersuchung der Expandierbarkeit diente ein mit einem Metallrahmen eingefaptes Sieb (Maschenweite: 0,1 bis 0,2 mm) mit den Abmessungen 1000 x 800 x 250 mm, welches sich in einem abgeschlossenen Metallgehäuse mit Dampfzuleitung und Dampfabzugsvorrichtung befand.

Der Wasserdampf von 100°C strömte von unten in die Vorschäumapparatur ein, passierte das Drahtgewebe mit den zu prüfenden Produkten und konnte durch die Dampfabzugsvorrichtung wieder entweichen. Vor Beginn der Prüfungen wurde die Apparatur zunächst ca. 5 min vorgeheizt. Anschließend wurden 100 g der expandierenden Perlpolymerisate mit einem Teilchendurchmesser zwischen 1,0 und 2,0 mm auf dem Drahtgewebe gleichmäßig verteilt, die Apparatur geschlossen und das Dampfventil geöffnet. Nach bestimmter Zeit wurde das Dampfventil wieder geschlossen und das Metallgehäuse geöffnet. Von dem vorgeschäumten Material wurde anschließend die Schüttdichte bestimmt. Die Tabelle gibt die minimal erreichbare Schüttdichte und dafür erforderliche Vorschäumzeit an.

Die erhaltenen Ergebnisse sind in der Tabelle zusammengestellt.

### 3. Molgewicht und Verzweigungsgrad

Die Bestimmung des mittleren Molgewichts M_{w} und des Verzweigungsgrades der Styrolpolymeren erfolgte an entgasten Proben. Das mittlere Molgewicht M_{w} wurde nach der GPC-Methode bestimmt.

Die Bestimmung des Verzweigungsgrades erfolgte durch Gel-Permeationschromatographie, die on-line mit einem Laserstreulichtgerät gekoppelt war nach R.C. Jordan, M.L. Connell, ACS Symposium Series No. 138 (1980)), S. 107-129 Size Exclusion Chromatography (GPC), Theodore Provder, Editor. Die Umrechnung in das zur Charakterisierung der Verzweigungsgrade notwendige Verhältnis der mittleren quadratischen Trägheitsradien der verzweigten und linearen Proben erfolgte nach M. Hoffmann, H. Krömer, R. Kuhn: Polymeranalytik I, Georg Thieme Verlag, Stuttgart, 1977. Die Bestimmung des Verzweigungsgrades wurde nach B.H. Zimm, W.H. Stockmayer: J. Chem. Phys. 17 (1949) 1301 für die Anzahl von Verzweigungspunkten n<5 und einer Funktionalität f=4 berechnet.

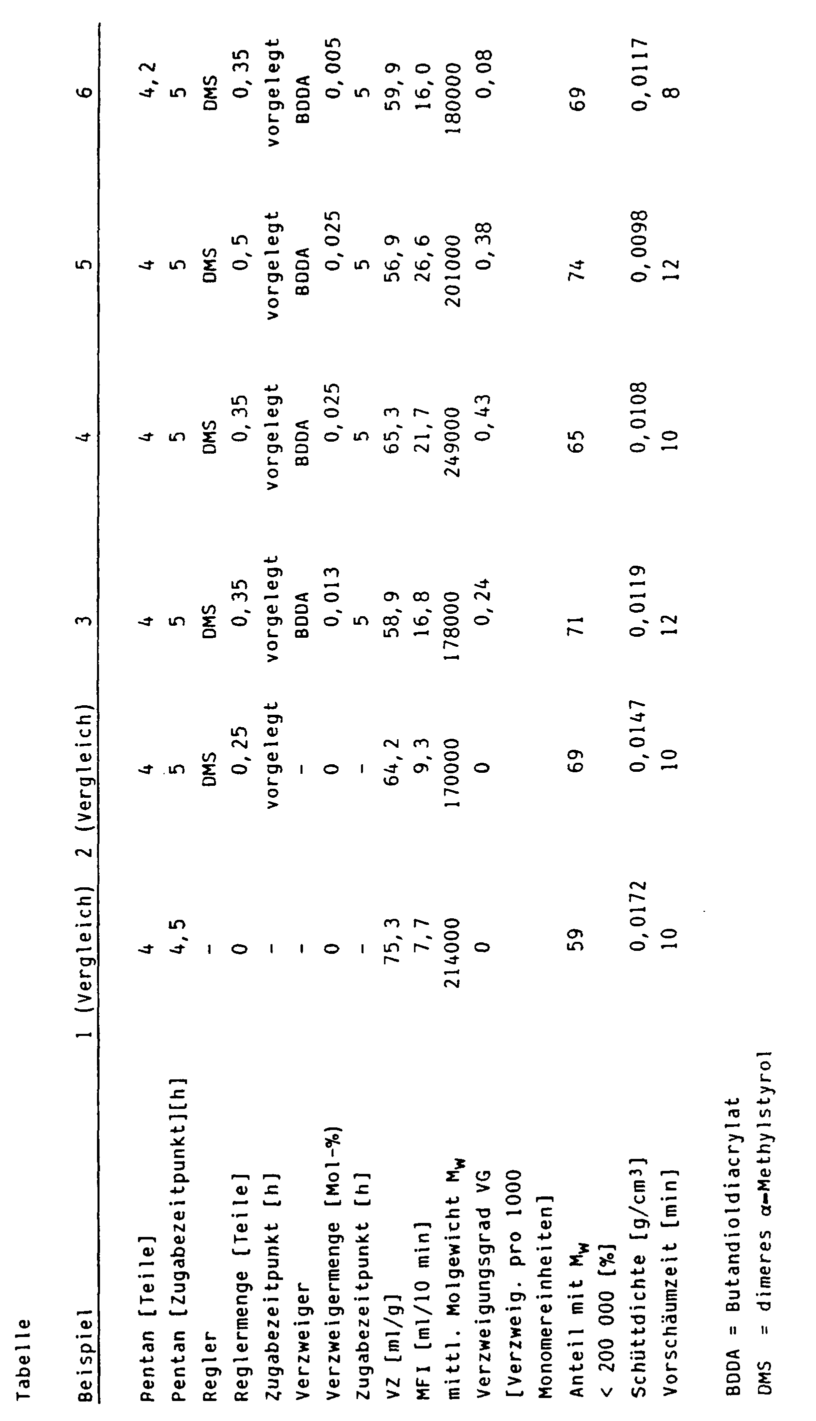

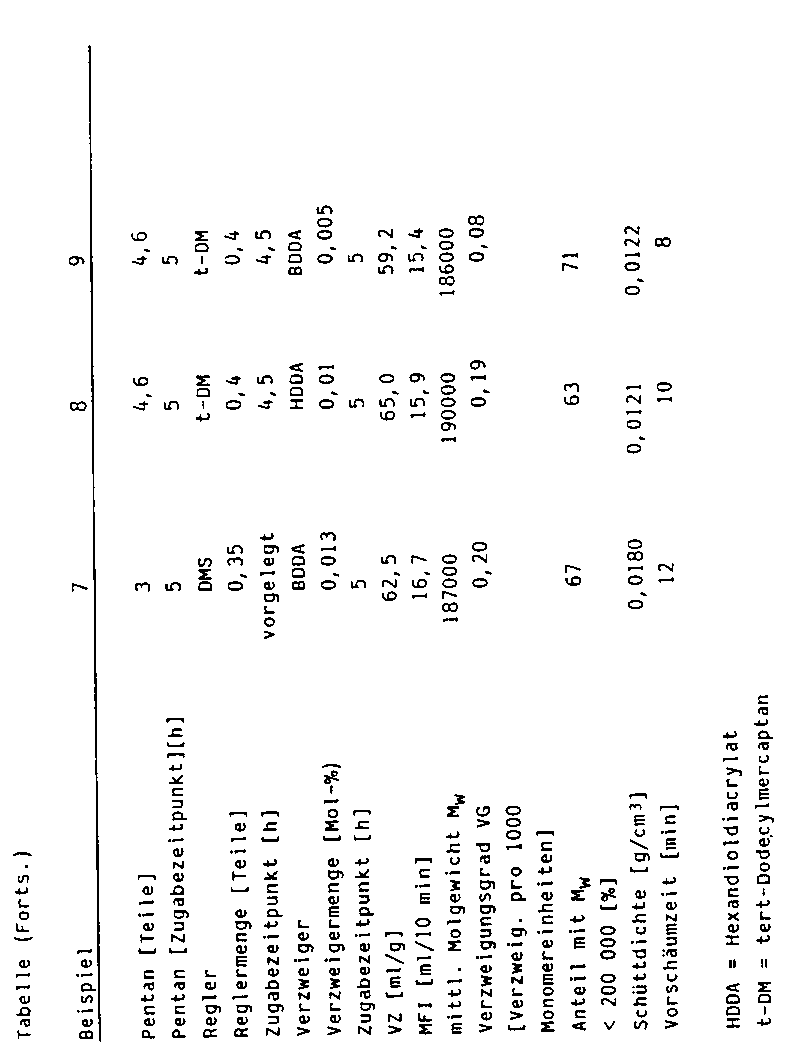

## Patentansprüche

1. Expandierbare Styrolpolymerisate mit hoher Expandierbarkeit, enthaltend
a) ein Styrolpolymerisat mit einer Viskositätszahl, gemessen in Toluol, zwischen 55 und 80 [ml/g], welches mindestens 50 Gew.-% Styrol und 0,0025 bis 0,05 Mol.-% eines Monomeren mit mehr als einer polymerisierbaren Doppelbindung einpolymerisiert enthält.
b) 1 bis 10 Gew.-%, bezogen auf a), eines C₃- bis C₆-Kohlenwasserstoffs als Treibmittel, sowie gegebenenfalls
c) übliche Hilfsmittel in wirksamen Mengen,
dadurch gekennzeichnet, daß das Styrolpolymerisat einen Schmelzindex MFI (190°C, 3,8 kp) zwischen 7,5 und 30 [g/10 min] aufweist und herstellbar ist durch Polymerisation in Gegenwart von 0,01 bis 1 Gew.-%, bezogen auf a), eines Reglers mit einer Kettenübertragungskonstante K zwischen 0,1 und 50.

2. Verfahren zur Herstellung expandierbarer Styrolpolymerisate gemäß Anspruch 1, dadurch gekennzeichnet, daß man Styrol und gegebenenfalls weitere Comonomere mit einer polymerisierbaren Doppelbindung in wäßriger Suspension in Gegenwart von 0,01 bis 1 Gew.-% eines Reglers mit einer Kettenübertragungskonstante K zwischen 0,1 und 50 und in Gegenwart von 0,0025 bis 0,05 Mol.-% eines Monomeren mit mehr als einer polymerisierbaren Doppelbindung als Verzweigter polymerisiert, und vor, während oder nach der Polymerisation das Treibmittel und gegebenenfalls übliche Zusatzstoffe zugibt.

3. Verfahren nach Anspruch 2, dadurch gekennzeichnet, daß als Verzweiger Di(meth)acrylate ausgewählt aus Glykoldi(meth) acrylat, Bütandioldi(meth)acrylat und Hexandioldiacrylat eingesetzt werden.

4. Styrolpolymerisat-Schaumstoffe der Dichte 0,005 bis 0,100 g/cm³, enthaltend
a) ein Styrolpolymerisat mit mindestens 50 Gew.-% ein polymerisiertem Styrol mit einer Viskositätszahl, gemessen in Toluol, zwischen 55 und 80 [ml/g] und einem Schmelzindex MFI (190°C, 38 kp) zwischen 7,5 und 30 [g/10 min], welches 0,0025 bis 0,05 Mol.-% eines Monomeren mit mehr als einer polymerisierbaren Doppelbindung einpolymerisiert enthält und herstellbar ist durch Polymerisation in Gegenwart von 0,01 bis 1 Gew.-%, bezogen auf a), eines Reglers mit einer Kettenübertragungskonstante K zwischen 0,1 und 50, sowie gegebenenfalls
c) übliche Hilfsmittel in wirksamen Mengen.

## Claims

1. An expandable styrene polymer of high expandability, comprising
a) a styrene polymer having a viscosity, measured in toluene, of from 55 to 80 [ml/g], which contains at least 50% by weight of styrene and from 0.0025 to 0.05 mol-% of a copolymerized monomer containing more than one polymerizable double bond,
b) from 1 to 10% by weight, based on a), of a C₃- to C₆- hydrocarbon as blowing agent, and, if desired,
c) conventional assistants in effective amounts,
wherein the styrene polymer has a melt flow index MFI (190°C, 3.8 kp) of from 7.5 to 30 [g/10 min] and can be prepared by polymerization in the presence of from 0.01 to 1% by weight, based on a), of a regulator having a chain-transfer constant K of from 0.1 to 50.

2. A process for the preparation of an expandable styrene polymer as claimed in claim 1, which comprises polymerizing styrene and, if desired, further comonomers containing a polymerizable double bond in aqueous suspension in the presence of from 0.01 to 1% by weight of a regulator having a chain-transfer constant K of from 0.1 to 50 and in the presence of from 0.0025 to 0.05 mol-% of a monomer containing more than one polymerizable double bond as branching agent, and adding the blowing agent and, if desired, conventional additives before, during or after the polymerization.

3. A process as claimed in claim 2, wherein the branching agent used is a di(meth)acrylate selected from the group consisting of glycol di(meth)acrylate, butanediol di(meth)acrylate and hexanediol diacrylate.

4. A styrene polymer foam having a density of from 0.005 to 0.100 g/cm³, comprising
a) a styrene polymer containing at least 50% by weight of a copolymerized styrene and having a viscosity, measured in toluene, of from 55 to 80 [ml/g] and a melt flow index MFI (190°C, 3.8 kp) of from 7.5 to 30 [g/10 min], which contains from 0.0025 to 0.05 mol-% of a copolymerized monomer containing more than one polymerizable double bond and can be prepared by polymerization in the presence of from 0.01 to 1% by weight, based on a), of a regulator having a chain-transfer constant K of from 0.1 to 50, and, if desired,
b) conventional assistants in effective amounts.

## Revendications

1. Polymérisats de styrène expansibles à forte expansibilité contenant
a) un polymérisat de styrène d'indice de viscosité, mesuré dans le toluène, compris entre 55 et 80 (ml/g), qui contient en polymérisation au moins 50 % en poids de styrène et 0,0025 à 0,05 % mole d'un monomère à plus d'une double liaison polymérisable.
b) 1 à 10 % en poids, rapporté à a), d'un hydrocarbure en C3 à C6, comme gonflant, ainsi qu'éventuellement
c) des auxiliaires usuels en quantités efficaces
caractérisé par le fait que le polymérisat de styrène présente un indice de fusion MFI (190°C, 3,8 kp) compris entre 7,5 et 30 (g/10 min) et est préparable par polymérisation en présence de 0,01 à 1 % en poids, rapporté à a) d'un régulateur d'une constante de transfert de chaînes K comprise entre 0,1 et 50.

2. Procédé de préparation de polymérisats de styrène expansibles selon la revendication 1, caractérisé par le fait que l'on polymérise du styrène et éventuellement d'autres comonomères à double liaison polymérisable, en suspension aqueuse en présence de 0,01 à 1 % en poids d'un régulateur d'une constante de transfert de chaînes K comprise entre 0,1 et 50 et en présence de 0,0025 à 0, 05 % mole d'un monomère à plus d'une double liaison polymérisable, comme agent de ramification, et avant, pendant ou après et éventuellement des additifs usuels.

3. Procédé selon la revendication 2, caractérisé par le fait que l'on utilise, comme agent de ramification, du di(méth)acrylate, choisi parmi le di(méth)acrylate de glycol, le di(méth)acrylate de butanediol et le diacrylate d'hexanediol.

4. Matière alvéolaire de polymérisat de styrène d'une densité de 0,005 à 0,100 g/cm³ contenant
a) un polymérisat de styrène à au moins 50 % en poids de styrène en polymérisation, d'un indice de viscosité, mesuré dans le toluène, compris entre 55 et 80 (ml/g) et un indice de fusion MFI (190°C, 38 kp) compris entre 7,5 et 30 (g/10 min), qui contient en polymérisats, 0,0025 à 0,05 % moles d'un monomère à plus d'une double liaison polymérisable et préparable par polymérisation en présence de 0,01 à 1 % en poids, rapporté à a) d'un régulateur à constante de transfert de chaîne K comprise entre 0,1 et 50, ainsi que éventuellement:
b) des auxiliaires usuels en quantités efficaces.
